Europäisches Patentamt

(19) European Patent Office

Office européen des brevets

(11) **EP 1 170 119 B1**

(12) **EUROPEAN PATENT SPECIFICATION**

(45) Date of publication and mention
of the grant of the patent:
**14.09.2005 Bulletin 2005/37**

(51) Int Cl.⁷: $B32B\ 27/10$, $G03C\ 1/79$,
$B29C\ 47/88$, $B41M\ 5/00$

(21) Application number: **00202377.8**

(22) Date of filing: **05.07.2000**

(54) **Polymer-laminated support materials**

Polymerlaminiertes Trägermaterial

Matériau de support stratifié avec polymère

(84) Designated Contracting States:
**DE FR GB**

(43) Date of publication of application:
**09.01.2002 Bulletin 2002/02**

(73) Proprietor: **Fuji Photo Film B.V.**
**5047 TK Tilburg (NL)**

(72) Inventors:
• **Struik, Peter**
**5331 TS Kerkdriel (NL)**
• **Brock, Frans**
**4907 KR Oosterhout (NL)**

(74) Representative: **Prins, Adrianus Willem et al**
**Vereenigde,**
**P.O.Box 87930**
**2508 DH Den Haag (NL)**

(56) References cited:
**EP-A- 0 945 758**

• **DATABASE WPI Section Ch, Week 199827**
**Derwent Publications Ltd., London, GB; Class**
**A89, AN 1998-301712 XP002154955 & JP 10**
**104788 A (MITSUBISHI PAPER MILLS LTD), 24**
**April 1998 (1998-04-24)**

## Description

### Field of invention

The present invention is directed to the manufacturing of polymer-laminated substrate for both photographic as well as non-photographic imaging, having a specific surface roughness. In the present invention the manufacturing method for a cooling roll is also included, that is suitable for producing the said roughness of said polymer surface and has a high degree of reproducibility.

### Background of the invention

The various surfaces of laminated supports used both in the photographic as well as in the non-photographic imaging industry, are mainly determined by the surface structure of the cooling roll applied during the extrusion coating processes. In this process, a polymer resin is melted and extruded onto a support. The hot polymer melt that is residing on the support, is cooled down by the cooling roll which has a specific surface roughness. The surface roughness of the cooling roll determines the appearance of the laminated product. Glossy polymer-laminated paper is produced by using a smooth cooling roll surface, whereas matte paper is produced by a cooling roll which has a surface roughness Rz between 5 $\mu$m and 9 $\mu$m.

There are several ways for making a specific surface roughness at the cooling roll. One of the common methods comprises electroplating, polishing, and roughening steps. The conventional way for producing a specific structure of the cooling roll is described in JP 10104788. The production of the cooling roll consists of the following steps:

(1) Copper plating the surface of the ground cooling roll, (2) polishing the surface to remove some undesired surface roughness, (3) sandblasting the surface to a desired surface roughness, (4) removing the undesired small roughness by polishing, (5) coat twice the rough surface with Chromium plating in order to harden the surface, (6) sandblasting again to adjust the roughness and followed by (7) polishing.

The limitation of this method is that it is relatively difficult to control the desired surface roughness of the final product. Fine tuning of the final roughness has to be done by polishing the hard chromium surfaces, which is time and labour consuming.

Another disadvantage of the above mentioned method is that some part of the hard chromium coating is removed during the sandblasting steps. As a result, the life time of the cooling roll reduces.

In the photographic industry the polymer-laminated substrate is coated thereafter with some light sensitive emulsion liquids. For economical reason we want to coat said emulsion at as high as possible coating speeds. One of the important factors that influences the coating speed of said emulsion liquids on the polymer surface is the surface roughness of the polymer-laminated substrate.

US 5212005 describes the range of surface roughness parameters, represented by the centre-plan average roughness SRa, the centre-plane Peak height SRp and by the centre-plane valley depth SRv, that can increase the emulsion coating speed in the photographic industry. The cooling roll which has the desired surface roughness is produced by (1) providing a copper layer on the steel roll, (2) embossing the copper layer, (3) sandblasting the embossed surface, (4) forming thereon chromium plating and (5) subjecting the plated surface to abrasive finishing.

Although it was shown that the coating speed could be increased by having the said surface roughness, it was found that the speed is limited to 180 m/min.

One of the countermeasures to increase the coating speed without modifying the emulsion liquids, is by polishing the cooling roll. However, the gain for the coating speed increase is meaningless and at the same time it influences the appearance of the coated material negatively.

So, there is a need to improve the production process of the cooling roll in such a way that the desired surface roughness on the polymer-laminated substrate can be realised, while the coating speed in the coating process thereafter will significantly increase.

### Problem to be solved by the inventor

There remains a need for a manufacturing process of a cooling roll wherein the surface of the cooling roll has such a structure that the desired surface roughness of the polymer-laminated substrate can be achieved with a high degree of reproducibility, while coating speed of the emulsion liquids on the polymer-laminated substrate has to increase significantly.

## Summary of the invention

The object of the present invention is to provide a polymer-laminated substrate, in particular a support for both photographic as well as for non-photographic imaging medium, which has a desired surface roughness and yet is able to be coated thereafter with a high coating speed. It was surprisingly found that the surface of said polymer-laminated substrate should be characterised by the absence of spatial frequency higher than 1800 peaks/cm.

Accordingly, in the present invention there is provided a polymer-laminated substrate of which the roughness is characterised by the spatial frequency lower than 1800 peaks/cm.

Also an object of the invention is to provide a process for manufacturing a cooling roll wherein the desired surface roughness can be achieved with a high degree of reproducibility and wherein the surface has the spatial frequency lower than 1800 peaks/cm.

The invention provides also a manufacturing process for a cooling roll, that is suitable for manufacturing the polymer-laminated substrate which has said surface roughness, wherein the surface roughness of the cooling roll is structured by (1) copper plating the steel surface of the cooling roll and polishing, (2) roughening the copper surface by applying sandblasting followed by polishing and (3) chrome plating the rough surface.

## Detailed description

During our investigation we found out that the conventional method for manufacturing cooling roll, generates next to the desired surface roughness parameters such as Ra and/or Rz, also a surface structure having spatial frequency that is higher than 1800 peak/cm. This so called micro or high frequency roughness is present after each sandblasting or abrasive steps. Surprisingly, it was found that the presence of said high frequency roughness on the polymer surface causes the relatively low coating speed of the emulsion liquids.

The limited speed for coating the emulsion liquids in the presence of the spatial frequency higher than 1800 peaks/cm is caused by the air that is entrained during the coating process. As a result, the coated polymer surface contains many coating defects which is disadvantageous for the quality of the product. By removing the high spatial frequency surface roughness, the coating speed can be increased significantly.

Removal of the high frequency surface roughness can be partly done by polishing. However, its effect on the increase of coating speed is very small. Besides that, polishing will also reduce the so called "macro surface structure" parameters such as Ra and Rz, which resulted in another appearance of the product, especially the glossiness.

The spatial frequency spectra is determined by measuring the roughness profile, called R-profile, of the polymer-laminated surface according to the DIN/ISO 4288, and applying the Fourier Transformation on the measured R-profile. The measuring length, Lt, of the R-profile is 17.5 mm and the cut-off wavelength, λc, is 0.8 mm.

The applied Fourier Transformation is based on the method of Ronald Bracewell, that is published by McGraw-Hill in 1986, which contains the following equation:

$$F(\upsilon) = \frac{1}{n} \sum_{\tau=1}^{n} f(\tau) e^{2\pi i (\upsilon/n)\tau} \qquad (1)$$

where $\upsilon$ is the spatial frequency and $\tau$ is the length.

The macro roughness parameters Rz and Ra are also derived from the R-profile measurement and are calculated according to DIN/ISO 4287:

$$R_z = \frac{1}{5} \sum_{i=1}^{5} (Y_{max-i} - Y_{min-i}) \qquad (2)$$

Rz= the average of maximum peak/valley heights of 5 consecutive sampling sections.

$$R_a = \frac{1}{n} \sum_{i=1}^{n} |Y_i| \qquad (3)$$

Ra: the arithmetic average of the absolute peak/valley heights of n consecutive sampling points.

The present invention relates, in the first place, to the production of the surface roughness of polymer-laminated substrate which has a desired Rz and Ra value and a spatial frequency lower than 1800 peaks/cm. The advantage of said polymer-laminated substrate is that said substrate can be coated with emulsion liquids at a high coating speed for the photographic as well as for other non-photographic applications.

In order to produce said polymer-laminated substrate by extrusion coating, it is of importance to manufacture a cooling roll which surface has a desired macro roughness and at the same time a spatial frequency lower than 1800 peaks/cm. For manufacturing the cooling roll, it is required to have a high degree of reproducibility next to the above mentioned surface roughness

From our investigation we surprisingly found that the following manufacturing process for the cooling roll is an excellent process to avoid the formation of high frequency surface roughness and yet is able to control the required Rz and Ra value. The steps are:

(1) Copper plating the steel surface of the cooling roll and polishing the plated surface to smoothen it.

(2) Sandblasting the copper plated surface to a desired surface roughness Rz. Thereafter, the rough surface need to be polished in order to smoothen and fine tune the Rz value.

(3) As a last step, the rough copper surface is chrome plating. The high spatial frequency which is present on the rough surface is then covered by the chrome plating and at the same time the desired Rz and Ra value is achieved.

The advantage of this method is that the macro surface roughness parameters can be easily controlled during the sandblasting and polishing steps of the copper surface. As a result, the cooling roll can be produced with a high degree of reproducibility.

The relatively hard chrome layer, plated thereafter, has the function to protect the surface structure from any undesired wear and tear or scratch or corrosion and also to cover the high spatial frequency. The process results in a hard surface of the cooling roll that has a long life time and is produced without the presence of the high spatial frequency.

By comparing the above production method for cooling roll and those described in US 5212005 and JP 10104788, it can be concluded that no abrasive step should be employed after the chrome plating to avoid the generation of spatial frequency spectra higher than 1800 peaks/cm..

This invention is especially related to the production of a glossy and structured surfaces of polymer-laminated substrate by extrusion coating, wherein the desired roughness of the polymer surface is characterised by the Rz between 0.5 μm and 8.0 μm and Ra between 0.05 μm and 3.5 μm.

The desired surface roughness of the cooling roll used in order to achieve the surface roughness requirements which are specified above, can be produced by applying sandblasting with a mesh size between 180μm and 400μm on the copper platted surface of the cooling roll. The gloss of the polymer-laminated substrate, measured at an angle of 60° is aimed at a value between 15% and 60% and preferably between 20% and 45%.

The suitable polymers can be selected from thermoplastic polymer classes that comprises polyolefins, polyesters and polyacrylates. The preferred polymer is polyethylene.

**Examples**

The present invention will be explained in detail by the following nonlimiting examples.

EXAMPLE 1: COMPARATIVE SAMPLE 1 AND INVENTION SAMPLE 1

Roughness measurement:

Roughness measurement according to DIN/ISO 4288 (1998)
Measuring device: Mahr, M3 Perthomether
Measuring length, Lt : 17.5 mm
Cut-off wavelength, λc : 0.8 mm
Fourier Transformation (FFT) calculation is done by using the software Mathsoft: Mathcad, version 8.
Rz and Ra are defined and calculated according to DIN/ISO 4287 (1998).

Gloss measurement:

Measuring device: Dr. Lange, Refo-3D.
Gloss value is measured under an angle of 60°.

Several cooling rolls were made according to the production method described in table 1.

Table 1

| Cooling roll production steps | Cooling roll for comparative sample 1 | Cooling roll for invention sample 1 |
|---|---|---|
| Cu-plating & polishing | applied | applied |
| Roughening the copper surface | sand-blast using grid #180 Rz = 11.5μm | sand-blast using grid #180 Rz = 11.5 μm |
| Roughness tuning (buffing/ polishing) | not applied | applied by using silk-buffing. Rz reduced till 9.8 μm |
| Chrome plating with a thickness of 35 μm | applied. Rz reduced to 10 μm | applied. Rz reduced to 8.3 μm Gloss value: 25% |
| Abrasion of the chrome surface | sand-blast using grid #180 Rz reduced till 9μm Gloss value: 8%. | not applied |
| Increasing gloss | polishing the rough chrome surface. Final gloss value: 20%. | not applied |

In order to obtain the polymer-laminated substrate, a base paper with a basis weight of 166 gr/m2 was extrusion coated with a low density polyethylene (LDPE) resin at an amount of 19 gr/m2, by using the cooling roll described in table 1.
The LDPE contains colouring agents, titanium dioxide and brightening agents. The back side of the paper substrate was previously extrusion coated with transparent polyethylene melt. Before the polyethylene layers are extruded, the paper surface is first activated by Corona treatment in order to improve the adhesion between the paper surface and the polyethylene melt.
The surface roughness of the top side of the polyethylene-laminated paper was measured and the results were given in table 2.

Table 2

| Roughness parameters | polyethylene-laminated paper of comparative sample 1 | polyethylene-laminated paper of invention sample 1 |
|---|---|---|
| Rz | 7 μm | 8 μm |
| Ra | 1.1 μm | 1.1 μm |
| Gloss | 6.2 % | 7.0 % |

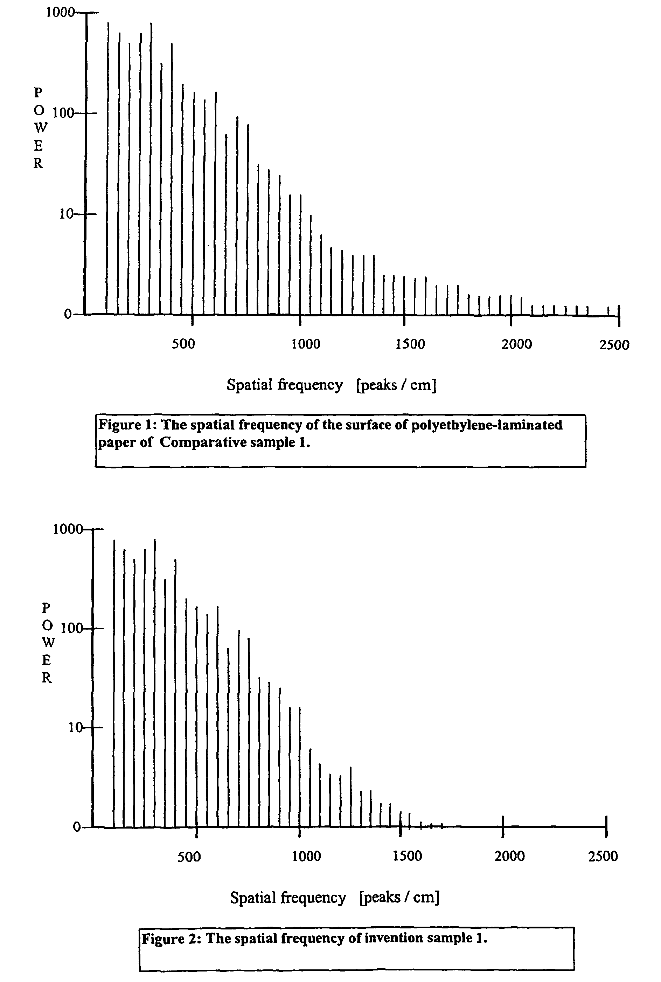

The spatial frequency spectra belongs to the surface of the polyethylene-laminated paper mentioned in table 2 can be found in figure 1 for comparative sample 1, and in figure 2 for the invention sample 1.
Those two figures showed that the spatial frequency spectra of the surface of invention sample 1 is lower than 1800 peaks/cm, whereas the comparative sample 1 contains spatial frequency spectra up to 2500 peaks/cm.
On top side of the polyethylene-laminated paper, colour paper coating solutions were employed. The layer structure was made up of four light sensitive layers containing silver halide, three colour filter layers and one protective layer. The total wet coating amount was 73 cc/m2. The lowermost layer, namely, a yellow colouring layer, has a viscosity of 4 cP (with a shear rate of 50 sec$^{-1}$) and a wet amount of 10 cc/m2.
A slide bead coating method was employed. The pressure of the pressure reducing chamber was set to a value lower by 40 mm H$_2$O than the atmospheric pressure. The gap between the end of the coating nozzle and the polyethylene-laminated paper was about 400 mm.

The polyethylene-laminated paper was heated up until 35 to 40°C and was electrostatically charged, prior to the coating process. The maximum coating speed which can be reached before air-entrainment happened, are given in table 3.

Table 3

|  | Comparative sample 1 | Invention sample 1 |
|---|---|---|
| maximum coating speed | $C_{max.}$ | $C_{max.}$ + at least 25%. |

The experimental results showed that coating speed of emulsion liquids is increased significantly when the spatial frequency of the surface of polyethylene-laminated paper is lower than 1800 peaks/cm.

EXAMPLE 2:

Several cooling rolls were made in the same way as in experiment 1 in order to obtained polyethylene-laminated papers having the surface roughness as shown in table 4.

Table 4

| Roughness parameters | polyethylene-laminated paper of comparative sample 2 | polyethylene-laminated paper of invention sample 2 |
|---|---|---|
| Rz | 0.7 µm | 0.7 µm |
| Ra | 0.1 µm | 0.1 µm |
| Gloss | 31 % | 35 % |

The same conclusion can be derived from this experiment, namely, the presence of spatial frequency higher than 1800 peaks/cm are limiting the maximum coating speed.

**Claims**

1. A polymer-laminated substrate, of which the roughness is **characterised by** a spatial frequency lower than 1800 peaks per cm.

2. The substrate of claim 1, wherein the surface of said polymer-laminated substrate has surface roughness parameters Rz between 0.5 µm to 8.0 µm and Ra between 0.05 µm to 3.5 µm.

3. The polymer-laminated substrate of claim 1 or 2, wherein said roughness is formed with a cooling roll, the surface of which is structured by (1) copper plating the steel surface of the cooling roll and polishing, (2) roughening the copper surface by applying sandblasting and polishing and (3) chrome plating the rough copper surface.

4. The substrate of claims 1-3, wherein said polymer is selected from the thermoplastic polymer classes that comprises polyolefins, polyacrylates and polyesters.

5. The substrate of claims 1-4, wherein said polymer-laminated substrate is used as a support material for photographic and for non-photographic applications.

6. A process for manufacturing a polymer-laminated substrate having a surface roughness that is **characterised by** a spatial frequency lower than 1800 peaks/cm., comprising extrusion of said polymer on a substrate and forming the surface structure of said polymer by a cooling roll, the surface of which is structured by (1) copper plating the steel surface of the cooling roll and polishing, (2) roughing the copper surface by applying sandblasting method and polishing, (3) chrome plating the rough surface.

7. Process for the manufacture of a cooling roll suitable for use in a process for preparing a polymer-laminated substrate having a roughness, which is **characterised by** a spatial frequency lower than 1800 peaks per cm, the surface of said cooling roll having been structured by (1) copper plating the steel surface of the cooling roll and polishing, (2) roughing the copper surface by applying sandblasting method and polishing, (3) chrome plating the rough surface.

**Patentansprüche**

1. Mit einem Polymer laminiertes Substrat, dessen Rauhigkeit durch eine räumliche Häufigkeit (spatial frequency) von weniger als 1800 Peaks pro cm **gekennzeichnet** ist.

2. Substrat nach Anspruch 1, wobei die Oberfläche des mit einem Polymer laminierten Substrats Oberflächenrauhigkeitsparameter Rz zwischen 0,5 µm bis 0,8 µm und Ra zwischen 0,05µm bis 3,5 µm aufweist.

3. Mit einem Polymer laminiertes Substrat nach Anspruch 1 oder 2, wobei die Rauhigkeit mit einer Kühlwalze gebildet ist, deren Oberfläche strukturiert ist durch: (1) Verkupfern der Stahloberfläche der Kühlwalze und Polieren, (2) Anrauen der Kupferoberfläche durch Anwendung von Sandstrahlen und Polieren und (3) Verchromen der rauen Kupferoberfläche.

4. Substrat nach Anspruch 1 - 3, wobei das Polymer ausgewählt ist aus der Klasse der thermoplastischen Polymere, welche Polyolefine, Polyacrylate und Polyester umfasst.

5. Substrat nach Anspruch 1-4, wobei das mit einem Polymer laminierte Substrat als ein Trägermaterial für die Fotographie und für nichtfotographische Anwendungen eingesetzt ist.

6. Verfahren zur Herstellung eines mit einem Polymer laminierten Substrates mit einer Oberflächenrauhigkeit, welche durch eine räumliche Häufigkeit von weniger als 1800 Peaks pro cm **gekennzeichnet** ist, umfassend das Extrudieren des Polymers auf ein Substrat und Bilden der Oberflächenstruktur des Polymers durch eine Kühlwalze, wobei die Oberfläche dieser struktieriert wird durch: (1) Verkupfern der Stahloberfläche der Kühlwalze und Polieren, (2) Anrauen der Kupferoberfläche durch Anwendung des Sandstrahlverfahrens und Polieren und (3) Verchromen der rauen Oberfläche.

7. Verfahren zur Herstellung einer Kühlwalze, welche zur Verwendung bei einem Verfahren zur Herstellung eines mit einem Polymer laminierten Substrats mit einer Rauhigkeit, welche durch eine räumliche Häufigkeit von weniger als 1800 Peaks pro cm **gekennzeichnet** ist, geeignet ist, wobei die Oberfläche der Kühlwalze strukturiert wurde durch: (1) Verkupfern der Stahloberfläche der Kühlwalze und Polieren, (2) Anrauen der Kupferoberfläche durch Anwendung des Sandstrahlverfahrens und Polieren und (3) Verchromen der rauen Oberfläche.

**Revendications**

1. Substrat stratifié avec polymère, dont la rugosité est **caractérisée par** une fréquence spatiale inférieure à 1 800 pics par cm.

2. Substrat selon la revendication 1, dans lequel la surface dudit substrat stratifié avec polymère présente des paramètres de rugosité de surface Rz compris entre 0,5 µm et 8,0 µm et Ra compris entre 0,05 µm et 3,5 µm.

3. Substrat stratifié avec polymère selon la revendication 1 ou 2, dans lequel ladite rugosité est formée avec un rouleau de refroidissement, dont la surface est structurée (1) en recouvrant de cuivre la surface en acier du rouleau de refroidissement et en polissant, (2) en rendant rugueuse la surface en cuivre en appliquant un sablage et en polissant et (3) en recouvrant de chrome la surface rugueuse en cuivre.

4. Substrat selon les revendications 1 à 3, dans lequel ledit polymère est choisi parmi les classes de polymères thermoplastiques qui comprennent les polyoléfines, les polyacrylates et les polyesters.

5. Substrat selon les revendications 1 à 4, dans lequel ledit substrat stratifié avec polymère est utilisé comme un matériau de support pour des applications photographiques et non photographiques.

6. Procédé pour fabriquer un substrat stratifié avec polymère ayant une rugosité de surface qui est **caractérisée par** une fréquence spatiale inférieure à 1 800 pics par cm, comprenant l'extrusion dudit polymère sur un substrat et la formation de la structure superficielle dudit polymère par un rouleau de refroidissement, dont la surface est structurée (1) en recouvrant de cuivre la surface en acier du rouleau de refroidissement et en polissant, (2) en rendant rugueuse la surface en cuivre en appliquant un procédé de sablage et en polissant, (3) en recouvrant de chrome la surface rugueuse.

7. Procédé pour la fabrication d'un rouleau de refroidissement adapté pour une utilisation dans un procédé pour préparer un substrat stratifié avec polymère ayant une rugosité qui est **caractérisée par** une fréquence spatiale inférieure à 1 800 pics par cm, la surface dudit rouleau de refroidissement ayant été structurée (1) en recouvrant de cuivre la surface en acier du rouleau de refroidissement et en polissant, (2) en rendant rugueuse la surface en cuivre en appliquant un procédé de sablage et en polissant, (3) en recouvrant de chrome la surface rugueuse.

Figure 1: The spatial frequency of the surface of polyethylene-laminated paper of Comparative sample 1.

Figure 2: The spatial frequency of invention sample 1.